# EUROPEAN PATENT APPLICATION

(11) **EP 3 147 765 A1**
(43) Date of publication of application: **29.03.2017**
(21) Application number: 16190524.5
(22) Date of filing: 26.09.2016
(51) Int. Cl.: G06F 3/041, G06F 3/0346

(54) **OPERATION INPUT DEVICE**

(30) Priority: 28.09.2015 JP 2015189906
(71) Applicant: KABUSHIKI KAISHA TOKAI RIKA DENKI SEISAKUSHO, Niwa-gun, Aichi 480-0195 (JP)
(72) Inventor: Miyata, Ikuko, Aichi, 480-0195 (JP)
(74) Representative: Betten & Resch

(57) **Abstract**

An operation input device includes a coordinate detector that detects an operation coordinate, an acceleration detector that detects an acceleration at a position of the operation coordinate, and a controller that compensates the acceleration detected by the acceleration detector based on a coordinate value of the operation coordinate detected by the coordinate detector.

## Description

### BACKGROUND OF THE INVENTION

### 1. FIELD OF THE INVENTION

The present invention relates to an operation input device.

### 2. DESCRIPTION OF THE RELATED ART

Conventionally, in operation input devices provided with touch sensors, there has been a problem in that in cases where a hand or finger accidentally touches the touch sensor location even though no operation input is intended, the touch sensor responds and erroneous input is performed contrary to the intent of the user. To prevent this, an operation input unit is known that includes a touch sensor for detecting that a conductor contacts or comes into close proximity to a detection electrode, an acceleration sensor for detecting impact or vibration, and input determination means for determining that operation input has been made when detection by the touch sensor and detection by the acceleration sensor has been performed (see Patent Document 1).

The operation input unit of Patent Document 1 includes a circuit board disposed in a housing. The circuit board includes a microcomputer, a touch detector for detecting changes in electrostatic capacitance of the electrode portion, an acceleration sensor for detecting changes in acceleration at a time of touch input, and the like with all the components mounted on the circuit board. This operation input unit determines that touch input has been made in cases where both the touch detector detects the proximity of a conductor and the acceleration sensor detects vibration of a magnitude caused by touch input. Patent Document 1 argues that with this configuration, erroneous determination of touch input can be reduced compared to cases where detection is carried out using a touch detector alone.

### Citation List

Patent Document 1: JP-A-2011-014384

### SUMMARY OF THE INVENTION

In the operation input unit of Patent Document 1, even if identical force is applied on the touch sensor, there are differences in output values from the acceleration sensor depending on the press operation position on the panel surface. Therefore, it has been difficult to set a uniform determination threshold. Additionally, in cases where the touch sensor is a two-dimensional pad having a predetermined area, differences will occur in the output values from the acceleration sensor depending on the mounting location of the acceleration sensor. Thus, there is a problem in that input operation accuracy varies depending on the touch position.

It is an object of the present invention to provide an operation input device that is provided with a compensation means for compensating a value outputted from an acceleration sensor on the basis of a touch position on a touch sensor.
[1] Provided is an operation input device including a coordinate detector for detecting operation coordinates, an acceleration detector for detecting acceleration at a position of the operation coordinates, and a controller for compensating the acceleration detected by the acceleration detector on the basis of coordinate values detected by the coordinate detector.
[2] The operation input device according to [1], wherein the controller may compensate the acceleration detected by the acceleration detector via a prepared compensation value table in which compensation values are associated with the coordinate values.
[3] The operation input device according to [2], wherein the compensation value table may be created on the basis of actual measurements.
[4] The operation input device according to any one of [1] to [3], wherein the controller may determine the presence or absence of a touch on the coordinate detector via a compensated acceleration and a uniform determination threshold value.
[5] The operation input device according to any one of [1] to [4], wherein the coordinate detector may comprise a mutual capacitance-type touch sensor.
[6] The operation input device according to any one of [1] to [5], wherein in a top view of the coordinate detector, according as a distance from a mount position of the acceleration detector to the operation coordinate increases, a compensation coefficient used for the compensation of the acceleration may increase.
[7] The operation input device according to [2] or [3], wherein the compensation value table may comprise a plurality of sections in which an entire width of each of X coordinate and Y coordinate of the coordinate detector is sectioned, and wherein the compensation coefficient may be assigned to each of the plurality of sections.

### Advantageous Effects of Invention

According to an embodiment of the invention, an operation input device provided with compensating means for compensating an output value from an acceleration sensor on the basis of a touch position on a touch sensor can be provided.

### BRIEF DESCRIPTION OF THE DRAWINGS

FIG. 1 is a schematic configuration block diagram illustrating a configuration of an operation input device according to an embodiment of the present invention.
FIG. 2A is a cross-sectional view illustrating touch operations on a touch sensor.
FIG. 2B is a drawing illustrating positional relationships between a position P0 of an acceleration detector and a touch position P1 and between P0 and a touch position P2, and distance relationships between P0 and P1 and between P0 and P2.
FIG. 2C is a drawing illustrating a relationship of a case where detected acceleration G1 and G2 are compensated on the basis of the distances between P0 and P1 and between P0 and P2, respectively.
FIG. 3 is an example of a compensation table for acceleration detection values, namely a compensation factor table showing compensation values set so as to correspond to divisions of operation coordinates (Xa, Ya).
FIG. 4 is flowchart illustrating the behavior of an operation input device according to a first embodiment of the present invention.
FIG. 5 is flowchart illustrating the behavior of an operation input device according to a second embodiment of the present invention.

### DETAILED DESCRIPTION OF THE PREFERRED EMBODIMENTS

### First Embodiment of the Present Invention

An operation input device 1 according to a first embodiment of the present invention includes a coordinate detector, namely a touch sensor 10, for detecting operation coordinates; an acceleration detector, namely an acceleration sensor 20, for detecting acceleration at a position of the operation coordinates on the touch sensor 10; and a controller 30 for compensating the acceleration detected by the acceleration sensor 20 on the basis of coordinate values detected by the touch sensor 10.

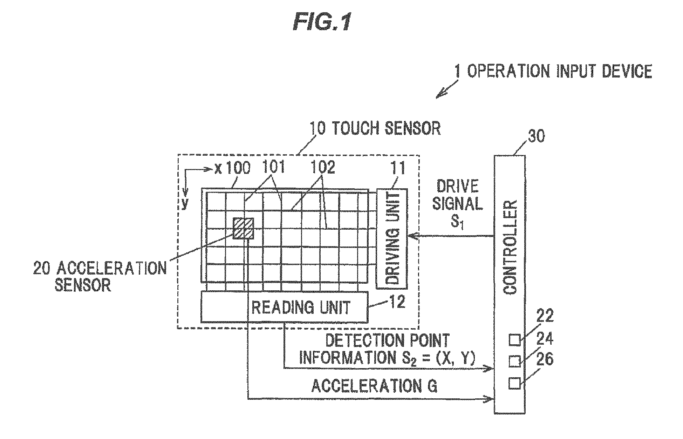

FIG. 1 is a schematic configuration block diagram illustrating a configuration of the operation input device according to the present embodiment of the invention. In the following, the configuration of the operation input device 1 according to the present embodiment is described using FIG. 1.

### Touch Sensor 10

As illustrated in FIG. 1, the touch sensor 10 is, for example, a touch sensor that detects a position (detection point) in an operation area on a panel surface that an operating finger has touched. An operator can, for example, operate an electronic device connected to the touch sensor 10 by performing operations in the operation area. An electrostatic capacitance-type touch sensor or the like capable of detecting a plurality of detection fingers, for example, can be used as the touch sensor 10.

The touch sensor 10 is, for example, a mutual capacitance-type touch sensor. When a finger is brought close to or touches an operation area 100, changes in electrical current occur depending on an area and distance between the detection electrode and the finger. As illustrated in FIG. 1, this detection electrode is provided in plurality under the operation area 100.

The detection electrodes include a plurality of first detection electrodes 101 and a plurality of second detection electrodes 102, which are elongatedly formed, and are insulated and disposed so as to cross each other. The first detection electrodes 101 are disposed at equal intervals so as to cross an x-axis defined along a paper lateral direction in FIG. 1.

The second detection electrodes 102 are disposed at equal intervals so as to cross a y-axis defined along a paper longitudinal direction in FIG. 1. The origin point of the x-axis and the y-axis is in the upper-left of the operation area 100 illustrated in FIG. 1.

As illustrated in FIG. 1, the touch sensor 10 is provided with a driving unit 11 for driving the second detection electrodes 102 and a reading unit 12 for reading electrostatic capacitance from the first detection electrodes 101.

The driving unit 11 is configured to sequentially supply voltage to the second detection electrodes 102 in the form of periodic electrical current based on a drive signal S₁ outputted from the controller 30.

The reading unit 12 is configured to sequentially switch connections with the first detection electrodes 101 while one of the second detection electrodes 102 is being driven, and read the electrostatic capacitance. The reading unit 12 is configured to output detection point information S₂, namely the operation coordinates (Xa, Ya), which includes information of the coordinates of the touch detection point. The coordinates of the touch detection point are calculated, for example, using weighted averages. In the present embodiment of the invention, the operation coordinates (Xa, Ya) are output from the detection point information S₂, both the X coordinate and the Y coordinate being, for example, of a resolution from 0 to 4095.

### Acceleration Sensor 20

The acceleration sensor 20 is an inertial sensor for measuring acceleration. Acceleration measurement and appropriate signal processing allow various information to be generated such as tilt, movement, vibration, and impact. While there are many types of acceleration sensors, here, a micro electro mechanical system (MEMS) acceleration sensor in which MEMS technology is applied can be used. The MEMS acceleration sensor includes a detection element portion for detecting acceleration and a signal processing circuit for amplifying and adjusting a signal from the detection element and outputting the resulting signal. For example, an electrostatic capacitance detection type acceleration sensor is a sensor that detects changes in electrostatic capacitance between a moving part and a fixed part of a sensor element.

Additionally, as a variation, for example, a load sensor capable of detecting a load based on an operation applied to the touch sensor 10 may be used in place of the acceleration sensor. Any load sensor may be used, provided that it is capable of detecting operation load caused by a touch operation on the panel surface, and an example thereof is a strain gauge. A strain gauge is a gauge that has a structure in which a metal resistor (metal foil) laid out in a zig-zag shape is attached on a thin insulator, and detects amounts of strain by measuring changes in electrical resistance caused by deformation. This strain gauge is capable of easily detecting micro-strain. Therefore, stress on the panel surface can be calculated from the amount of strain detected, and the operation load can be calculated from the stress. Note that, in this case, relationships between amounts of strain and operation loads are found in advance through calibration or the like.

As illustrated in FIG. 1, the acceleration sensor 20 is attached to a portion of the touch sensor 10. In FIG. 1, for example, the acceleration sensor 20 is attached to a portion close to the upper left corner of the touch sensor 10. The location where the acceleration sensor 20 is attached can be determined on the basis of design restrictions and the like.

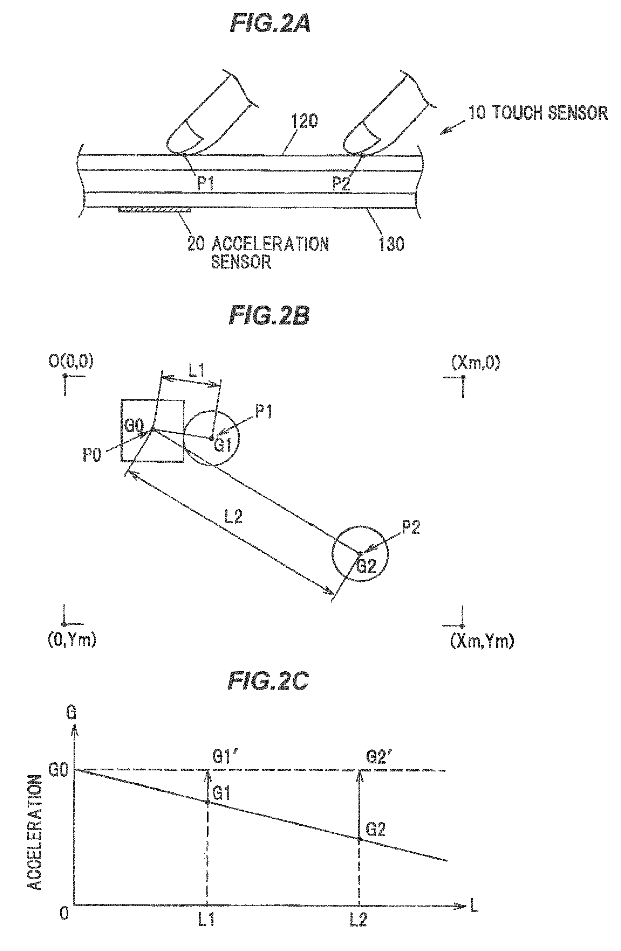

FIG. 2A is a cross-sectional view illustrating touch operations on the touch sensor. FIG. 2B is a drawing illustrating positional relationships between a position P0 of an acceleration detector and a touch position P1 and between P0 and a touch position P2, and distance relationships between P0 and P1 and between P0 and P2. FIG. 2C is a drawing illustrating a relationship of a case where detected acceleration G1 and G2 are compensated on the basis of the distances between P0 and P1 and between P0 and P2, respectively.

As illustrated in FIG. 2A, the acceleration sensor 20 is attached to a substrate 130 located under a panel surface 120 of the touch sensor 10. A structure is provided in which when pressing force accompanying a touch operation is applied to the panel surface 120, this pressing force is also applied to the substrate 130. Note that a configuration is also possible in which the acceleration sensor 20 is directly attached to the lower side of the panel surface 120 of the touch sensor 10.

As illustrated in FIGS. 2A and 2B, in the panel surface 120 of the touch sensor 10, an origin point O (0, 0) of the coordinates (X, Y) is located in the upper left; the upper right is (Xm, 0), the lower left is (0, Ym), and the lower right is (Xm, Ym). Pressing positions (touch positions) with respect to the attachment position P0 of the acceleration sensor 20 are, for example, P1 and P2; and distances from P0 to P1 and P2 are L1 and L2, respectively. Additionally, acceleration values at the attachment position P0 of the acceleration sensor 20 are G0, G1, and G2, respectively.

In a case such as that described above, it is thought that output values of the acceleration values G1 and G2 at the pressing positions (touch positions) P1 and P2 will be lower than the acceleration value G0 at the attachment position P0 of the acceleration sensor 20 depending on the distance between G0 and G1 and the distance between G0 and G2. As such, the output values are compensated using factors corresponding to the distances from the acceleration sensor 20.

Specifically, as illustrated in FIG. 2C, the acceleration values G1 and G2 at the pressing positions (touch positions) P1 and P2 are compensated by being multiplied by a predetermined factor corresponding to the distance (the distances L1 and L2, from P0 to P1 and P2) from the acceleration sensor 20, resulting in G1' and G2', respectively. As a result, compensation is carried out even in cases where the detection positions are separated from the attachment position P0 of the acceleration sensor 20, which improves detection accuracy.

### Controller 30

The controller 30 is, for example, a microcomputer including a central processing unit (CPU) that executes arithmetic operations following a program, semiconductor memories, namely RAM and read only memory (ROM), and the like.

Additionally, the controller 30 sequentially outputs the drive signal S₁ to the driving unit 11 for electrode driving, and sequentially acquires the detection point information S₂, namely the operation coordinates (Xa, Ya), of the detection point from the reading unit 12. A compensation factor table 22 is provided in the controller 30 as a calculation function.

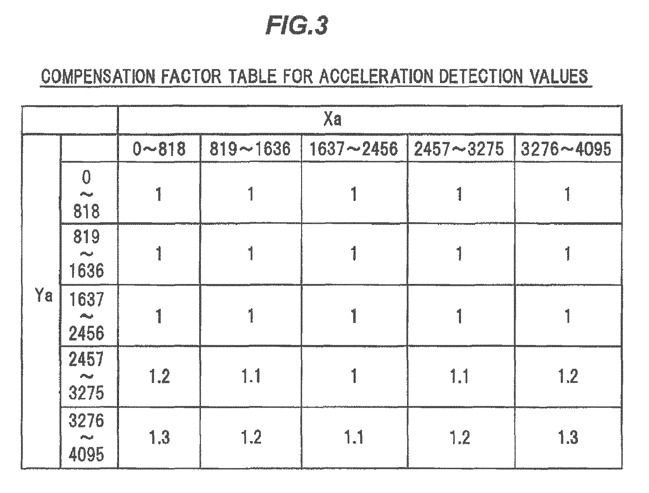

FIG. 3 is an example of the compensation table for acceleration detection values, namely a compensation factor table showing compensation values set so as to correspond to divisions of the operation coordinates (Xa, Ya).

In FIG. 3, the coordinate values of the X coordinate and the Y coordinate are each divided into five divisions, namely, 0 to 818, 819 to 1637, 1638 to 2456, 2457 to 3275, and 3276 to 4095. Note that the number of divisions is not limited thereto and may be set as desired.

In FIG. 3, for example, in a case where both the X and Y coordinates at the attachment position P0 of the acceleration sensor 20 belongs to the 819 to 1637 division, the compensation factor in this division and adjacent divisions is 1. As distance from this division increases, the compensation factor also increases from 1. Note that the compensation factor for each of the divisions described above is set on the basis of actual measurements of the touch sensor 10. Thus, it should be understood that the compensation factors are not necessarily values proportional to the distance (e.g. the distances L1 and L2, from P0 to P1 and P2) from the acceleration sensor 20.

### Behavior of the Operation Input Device

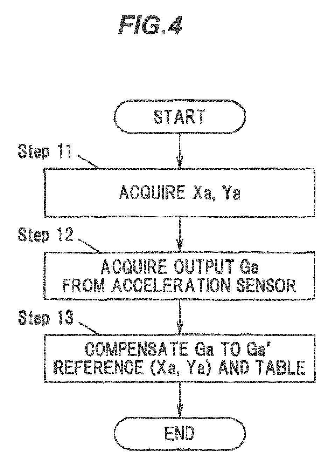

FIG. 4 is flowchart illustrating the behavior of the operation input device according to a first embodiment of the present invention. Hereinafter, the behavior of the operation input device according to the first embodiment of the present invention is described while following this flowchart.

The behavior of the operation input device 1 begins with the controller 30 acquiring the operation coordinates (Xa, Ya) (Step 11). The controller 30 sequentially outputs the drive signal S₁ to the driving unit 11 for electrode driving, and sequentially acquires the detection point information S₂, namely the operation coordinates (Xa, Ya), of the detection point from the reading unit 12.

Next, the controller 30 acquires output Ga from the acceleration sensor 20 (Step 12). As illustrated in FIG. 1, acceleration G outputted from the acceleration sensor 20 is input as required into the controller 30, and the controller 30 acquires the acceleration Ga at the timing of the acquisition of the operation coordinates (Xa, Ya) in Step 11.

The controller 30 compensates the acceleration Ga such that the acceleration Ga becomes Ga' by referencing the compensation factor table 22 which is similar to that shown in FIG. 3 (Step 13). Specifically, the controller 30 references the compensation factor table 22 and performs arithmetic operations, in which the acceleration Ga is multiplied by the compensation factor of the corresponding division, to calculate the compensated acceleration Ga'.

### Effects of the First Embodiment of the Present Invention

With the operation input device 1 according to the first embodiment, the following effects are achieved. The operation input device 1 according to the first embodiment compensates the acceleration Ga such that the acceleration Ga becomes Ga' through the above-described behavior flow. That is, the operation input device 1 can perform detection (calculation) on the output value from the G sensor, to obtain acceleration compensated on the basis of the position of the panel surface that has been pressed. As such, restrictions on the mounting position of the G sensor are eliminated and flexible designs are made possible. Additionally, even if a user presses a different position of the panel surface with an identical amount of force, the output value from the G sensor is compensated and, therefore, it is possible to set a uniform determination threshold.

### Second Embodiment of the Present Invention

An operation input device 1 of a second embodiment of the present invention is provided with the coordinate detector, the acceleration detector, and the controller of the first embodiment. The controller determines the presence or absence of a touch on the coordinate detector via a compensated acceleration and a uniform determination threshold.

With the operation input device 1 of the second embodiment, position coordinates of proximity or touch (contact, pressure) to the coordinate detector can be detected by the coordinate detector; and the presence or absence of touch (contact, pressure) can be detected and determined by the acceleration detector. That is, touch coordinates can be detected where an operator is certainly touching the panel surface of the touch sensor of the operation input device. Additionally, operation coordinates can be detected where a touch (contact, pressure) is not detected by the acceleration detector. Such operation coordinates are proximal operation coordinates of a so-called hovering state, a state in proximity to the panel surface of the touch sensor. In the present embodiment of the invention, the detected acceleration is compensated on the basis of the coordinate values detected by the coordinate detector and, on the basis of the compensated acceleration, the presence or absence of a touch (contact, pressure) is detected and determined by the above-described acceleration detector.

The operation input device 1 according to the second embodiment includes a coordinate detector, namely a touch sensor 10, for detecting operation coordinates; an acceleration detector, namely an acceleration sensor 20, for detecting acceleration at a position of the operation coordinates on the touch sensor 10; and a controller 30 for compensating the acceleration detected by the acceleration sensor 20 on the basis of coordinate values detected by the touch sensor 10. The controller 30 determines the presence or absence of a touch on the touch sensor 10 via the compensated acceleration and a uniform determination threshold. In the following, descriptions of constituents differing from the first embodiment are given. As the touch sensor 10 and the acceleration sensor 20 are the same as in the first embodiment, description thereof is omitted.

### Controller 30

The controller 30 is, for example, a microcomputer including a central processing unit (CPU) that executes arithmetic operations following a program, semiconductor memories, namely RAM and read only memory (ROM), and the like.

Additionally, the controller 30 sequentially outputs the drive signal S₁ to the driving unit 11 for electrode driving, and sequentially acquires the detection point information S₂, namely the operation coordinates (Xa, Ya), of the detection point from the reading unit 12. A compensation factor table 22 and a determination unit 24 for determining whether or not the panel surface 120 has been touched are provided in the controller 30 as calculation functions. Additionally, a determination threshold 26 is provided as a determination criterion of the determination unit 24. Note that the determination threshold 26 (Gth) is set as a uniform value, independent of the position coordinates on the panel surface of the touch sensor.

As in the first embodiment, in FIG. 3, coordinate values of the X coordinate and the Y coordinate are each divided into five divisions, namely, 0 to 818, 819 to 1637, 1638 to 2456, 2457 to 3275, and 3276 to 4095. Note that the number of divisions is not limited thereto and may be set as desired.

Additionally, in FIG. 3, for example, in a case where both the X and Y coordinates at the attachment position P0 of the acceleration sensor 20 belongs to the 819 to 1637 division, the compensation factor in this division and adjacent divisions is 1. As distance from this division increases, the compensation factor also increases from 1. Note that the compensation factor for each of the divisions described above is set on the basis of actual measurements of the touch sensor 10. Thus, it should be understood that the compensation factors are not necessarily values proportional to the distance (e.g. the distances L1 and L2, from P0 to P1 and P2) from the acceleration sensor 20.

### Behavior of the Operation Input Device

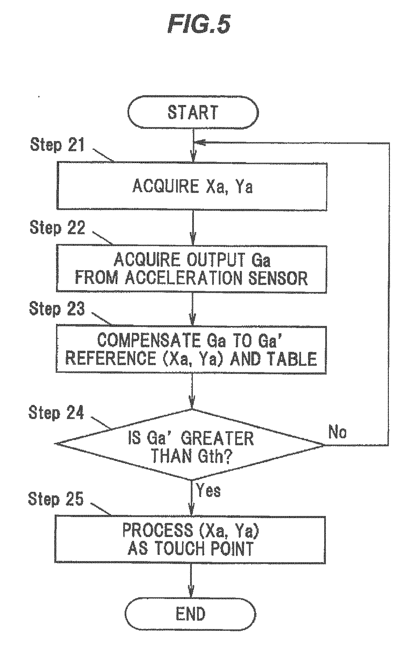

FIG. 5 is flowchart illustrating the behavior of the operation input device according to the second embodiment of the present invention. Hereinafter, the behavior of the operation input device according to the present embodiment of the invention is described while following this flowchart.

Upon starting of the behavior of the operation input device 1, first, the controller 30 acquires the operation coordinates (Xa, Ya) (Step 21). The controller 30 sequentially outputs the drive signal S₁ to the driving unit 11 for electrode driving, and sequentially acquires the detection point information S₂, namely the operation coordinates (Xa, Ya), of the detection point from the reading unit 12. Note that at this point in time, it is not clear whether the acquired operation coordinates (Xa, Ya) are operation coordinates of a touch state or operation coordinates of a hovering state.

Next, the controller 30 acquires output Ga from the acceleration sensor 20 (Step 22). As illustrated in FIG. 1, acceleration G outputted from the acceleration sensor 20 is input as required into the controller 30, and the controller 30 acquires the acceleration Ga at the timing of the acquisition of the operation coordinates (Xa, Ya) in Step 21.

The controller 30 compensates the acceleration Ga such that the acceleration Ga becomes Ga' by referencing the compensation factor table 22 which is similar to that shown in FIG. 3 (Step 23). Specifically, the controller 30 references the compensation factor table 22 and performs arithmetic operations, in which the acceleration Ga is multiplied by the compensation factor of the corresponding division, to calculate the compensated acceleration Ga'.

The controller 30 compares the compensated acceleration Ga' calculated in Step 23 against the determination threshold 26 (Gth) to determine whether or not the acceleration Ga' is greater than Gth (Step 24). If the acceleration Ga' is greater than Gth, Step 25 is carried out, and if acceleration Ga' is not greater than Gth, the sequence is repeated starting from Step 21.

In Step 25, the controller 30 can execute various processing, assuming the operation coordinates (Xa, Ya) to be the coordinates of a touch point (Step 25). For example, based on the operation coordinates (Xa, Ya), the controller 30 can process the coordinates (Xa, Ya) of the touch point as a selection point or input point of an operation; or in cases where the operation coordinates (Xa, Ya) are continuous, can process the coordinates (Xa, Ya) as a tracing operation. Additionally, the controller 30 is capable of various other kinds of processing including gesture input consisting of a tracing operation along a specific pattern path, pinch-in and pinch-out consisting of operations at a plurality of points, and the like.

While the sequence of the behavior flow described above is terminated after Step 25, the behavior flow may be repeated if deemed necessary.

Note that in Step 24 above, when the acceleration Ga' is not greater than Gth, the operation coordinates (Xa, Ya) are operation coordinates of a hovering state. Accordingly, the operation coordinates (Xa, Ya) of this hovering state are processed as coordinate values for proximal operation and, thereby, various kinds of processing as proximal operations, which are not touch operations on the panel surface, are possible.

### Effects of the Second Embodiment of the Present Invention

With the operation input device 1 according to the second embodiment of the invention, the following effects are achieved.
(1) In this embodiment, the detected acceleration is compensated on the basis of the coordinate values detected by the coordinate detector and, on the basis of the compensated acceleration, the presence or absence of touch (contact) is detected and determined by the above-described acceleration detector. Specifically, the acceleration values G1 and G2 at the pressing positions (touch positions) P1 and P2 are compensated by being multiplied by a predetermined factor corresponding to the distance (the distances L1 and L2, from P0 to P1 and P2) from the acceleration sensor 20, resulting in G1' and G2', respectively. As a result, compensation is carried out even in cases where the detection positions are separated from the attachment position P0 of the acceleration sensor 20, which improves detection accuracy.
(2) Due to the improvement in detection accuracy described above, it is possible to determine whether or not an operator (user) is certainly touching the panel surface 120 of the touch sensor 10. Therefore, it is possible to reliably execute processing based on touch operations on the touch sensor 10.
(3) The compensation processing of the acceleration is executed by the controller 30 referencing the correction factor table 22. In the compensation factor table 22, the compensation factors are set for each division of the operation coordinates (Xa, Ya) and, thus, the compensation processing can be simply executed. Additionally, the compensation factor table 22 is created on the basis of actual measurements and, thus, compensation to more realistic values is possible. Moreover, acceleration to be detected also changes depending on the form in which the touch sensor 10 is attached/implemented. As such, with the present invention, realistic compensation processing can be simply performed due to the compensation factor table being set on the basis of actual measurements.

Although embodiments of the present invention have been described above, these embodiments are merely examples and the invention according to claims is not to be limited thereto. These novel embodiments may be implemented in various other forms, and various omissions, substitutions, changes, and the like can be made without departing from the spirit and scope of the present invention. In addition, all combinations of the features described in these embodiments are not necessary to solve the problem. Further, these embodiments are included within the spirit and scope of the invention and also within the invention described in the claims and the scope of equivalents thereof.

## Claims

1. An operation input device, comprising:
a coordinate detector that detects an operation coordinate;
an acceleration detector that detects an acceleration at a position of the operation coordinate; and
a controller that compensates the acceleration detected by the acceleration detector based on a coordinate value of the operation coordinate detected by the coordinate detector.

2. The device according to claim 1, wherein the controller compensates the acceleration detected by the acceleration detector according to a compensation value table in which a compensation coefficient of the acceleration is associated with the coordinate value.

3. The device according to claim 2, wherein the compensation value table is created based on an actual measurement of the acceleration.

4. The device according to any one of claims 1 to 3, wherein the controller determines existence of a touch on the coordinate detector based on the compensated acceleration and a uniform determination threshold.

5. The device according to any one of claims 1 to 4, wherein the coordinate detector comprises a mutual capacitance-type touch sensor.

6. The device according to any one of claims 1 to 5, wherein in a top view of the coordinate detector, according as a distance from a mount position of the acceleration detector to the operation coordinate increases, a compensation coefficient used for the compensation of the acceleration increases.

7. The device according to claim 2 or 3, wherein the compensation value table comprises a plurality of sections in which an entire width of each of X coordinate and Y coordinate of the coordinate detector is sectioned, and wherein the compensation coefficient is assigned to each of the plurality of sections.
